# EUROPEAN PATENT APPLICATION

(11) **EP 4 708 475 A2**
(43) Date of publication of application: **11.03.2026**
(21) Application number: 25200236.5
(22) Date of filing: 04.09.2025
(51) Int. Cl.: H01M 50/107, H01M 50/152, H01M 50/179, H01M 50/56, H01M 50/562

(54) **POLE, COVER PLATE ASSEMBLY AND BATTERY CELL**

(30) Priority: 06.09.2024 CN 202422198546 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: HE, Wei, Huizhou, Guangdong, 516039 (CN); ZHENG, Xu, Huizhou, Guangdong, 516039 (CN); SHU, Kuanjin, Huizhou, Guangdong, 516039 (CN); DUAN, Dong, Huizhou, Guangdong, 516039 (CN); LIU, Ziwen, Huizhou, Guangdong, 516039 (CN)
(74) Representative: Berggren Oy

(57) **Abstract**

A pole for a battery cell, a corresponding cover plate assembly, and a battery cell, relating to the field of battery technology. The pole includes a first metal part and a second metal part; where the first metal part has a first concave part, and a first convex part is disposed on an inner wall of the first concave part; the second metal part includes a main body and a second convex part connected to each other, where a second concave part is disposed on an outer peripheral surface of the second convex part, the second convex part is embedded into the first concave part, and the first convex part is embedded into the second concave part; a side of the second concave part away from a bottom wall of the first concave part is represented as a first surface, and a gap is only disposed between the first convex part and the first surface.

## Description

### TECHNICAL FIELD

The present application relates to the field of battery technology, and specifically relates to a pole, a cover plate assembly, and a battery cell.

### BACKGROUND

A pole is an important component for connecting the inside and outside of a battery cell. One end of the pole is connected with an external circuit of the battery cell, and the other end is connected with an internal electrode assembly of a power battery. In order to reduce costs and weight, the external circuit of the battery cell adopts aluminum material for current transmission. However, inside the battery cell, a negative-electrode current collector and a current collector of a negative electrode sheet are made of the same material, which is copper material. Therefore, in order to improve conductivity of the pole and control weight and cost of the battery cell, a copper-aluminum composite pole is adopted to connect the negative-electrode current collector with the external circuit. The copper material of the copper-aluminum composite pole is connected with the negative-electrode current collector, and the aluminum material of the copper-aluminum composite pole is connected with the external circuit.

In related technologies, to ensure the reliability of the combination between the copper material and the aluminum material, an interlocking structure is disposed between the copper material and the aluminum material. However, since the interlocking structure is formed by upsetting, the area of the fitting surface between the copper material and the aluminum material is small, thereby reducing the overcurrent capacity of the pole.

### SUMMARY

Embodiments of the present application provide a pole, a cover plate assembly, and a battery cell, which can improve the overcurrent capacity of the pole.

In a first aspect, embodiments of the present application provide a pole. The pole includes a first metal part and a second metal part; the first metal part has a first concave part, where a first convex part is convexly disposed on a side of an inner wall of the first concave part close to an opening of the first concave part; the second metal part includes a main body and a second convex part connected to each other, where a second concave part is disposed on an outer peripheral surface of the second convex part, the second convex part is embedded into the first concave part, the first convex part is embedded into the second concave part, and a side of the second concave part away from a bottom wall of the first concave part is represented as a first surface; where between the first metal part and the second metal part, a gap is only disposed between the first convex part and the first surface, and material fluidity of the second metal part is greater than material fluidity of the first metal part.

In an embodiment, the first surface includes a top surface and a transition surface, where one side of the transition surface is connected with a side of the top surface close to an axis of the pole, and another side of the transition surface smoothly transitions to a bottom wall of the second concave part.

In an embodiment, a spacing of the gap is W1, satisfying: W1≤0.1mm.

In an embodiment, along a radial direction of the pole, an end of the second convex part away from the main body includes a first radius R1, and the main body includes a second radius R2, satisfying: R1 > R2.

In an embodiment, a difference between the first radius R1 and the second radius R2 is ΔR, satisfying: 40%R2≤ΔR≤60%R2.

In an embodiment, the second concave part extends around an axis of the pole to form an annular structure, and the first convex part extends around the axis of the pole to form an annular structure.

In an embodiment, the first convex part includes a radial extension part and an axial extension part, where the radial extension part is disposed radially inward from a side of the inner wall of the first concave part close to the opening of the first concave part, the radial extension part includes a top end surface away from the bottom wall of the first concave part, and the axial extension part extends from the top end surface in a direction away from the bottom wall of the first concave part.

In an embodiment, a radius of an outer peripheral surface of the axial extension part is consistent with a radius of the main body.

In an embodiment, an outer peripheral surface of the first convex part and an outer peripheral surface of the main body are disposed on a same circumference.

In an embodiment, material of the first metal part is copper material, and material of the second metal part is aluminum material.

In a second aspect, embodiments of the present application provide a cover plate assembly. The cover plate assembly includes a cover plate, an upper plastic part, a lower plastic part, a current collector, a sealing ring, and the aforementioned pole; the pole penetrates through the cover plate, and a terminal is located on one side of the cover plate; the upper plastic part is disposed between the terminal and the cover plate; the lower plastic part is disposed on another side of the cover plate; one end of the current collector is connected with an end of the pole away from the terminal; and the sealing ring is disposed between the pole and a mounting hole.

In a third aspect, embodiments of the present application provide a battery cell. The battery cell includes a housing, an electrode assembly, and the aforementioned cover plate assembly; where the housing has a containing cavity; the electrode assembly is disposed in the containing cavity; the cover plate is connected with the housing and closes an opening of the containing cavity, and another end of the current collector is connected with the electrode assembly.

Beneficial effects of embodiments of the present application are as follows.

In the embodiments of the present application, by arranging the first convex part to be embedded into the second concave part and the second convex part to be embedded into the first concave part, a structure where the first metal part and the second metal part are embedded into each other can be formed, so as to ensure the reliability of the combination of the two metal materials; in addition, by embedding one end of the second metal part with better material fluidity into the first metal part, during the upsetting forming of the pole, the second metal part with better material fluidity can extrude the first metal part, so as to form a larger extruding surface where the second metal part extrudes the first metal part. In this way, the extruding force between the two metal materials can be ensured based on the better fluidity of the second metal part, thereby reducing the gap of the combining surface between the second metal part and the first metal part and improving the overcurrent capacity of the pole.

### BRIEF DESCRIPTION OF THE DRAWINGS

To more clearly illustrate the technical solutions in the embodiments of the present application, the drawings required for describing the embodiments will be briefly introduced below. Obviously, the drawings in the following description are merely some embodiments of the present application. For those skilled in the art, other drawings can also be obtained based on these drawings without making creative labor.
Fig. 1 is a schematic structural diagram of a pole provided by embodiments of the present application;
Fig. 2 is a top view of the pole provided by embodiments of the present application;
Fig. 3 is a cross-sectional view along A-A in Fig. 2;
Fig. 4 is an enlarged view of portion C in Fig. 3;
Fig. 5 is a cross-sectional view along B-B in Fig. 3;
Fig. 6 is a schematic structural diagram of a first metal part provided by embodiments of the present application;
Fig. 7 is a schematic structural diagram of a cover plate assembly provided by embodiments of the present application.

### Explanation of reference signs:

011: pole;
111: first metal part; 1112: first concave part; 1113: first convex part; 1114: radial extension part; 1115: axial extension part; 1116: top end surface;
112: second metal part; 1121: main body; 1122: second convex part; 1123: second concave part; 1124: first surface; 1125: top surface; 1126: transition surface;
012: terminal;
002: cover plate assembly; 021: cover plate; 022: upper plastic part; 023: lower plastic part; 024: current collector.

### DETAILED DESCRIPTION

The technical solutions in the embodiments of the present application will be clearly and completely described below with reference to the accompanying drawings in the embodiments of the present application. Obviously, the described embodiments are merely some embodiments rather than all the embodiments of the present application. Based on the embodiments in the present application, all other embodiments obtained by those skilled in the art without making creative labor shall fall within the protection scope of the present application.

In addition, it should be understood that the specific implementations described herein are only used to illustrate and explain the present application, and are not used to limit the present application. In the present application, the terms "first" and "second" are only used for descriptive purposes, and shall not be understood as indicating or implying relative importance or implicitly indicating the quantity of indicated technical features. Thus, a feature defined with "first" or "second" may explicitly or implicitly include one or more of the features.

In the description of the present application, it should be noted that, unless otherwise clearly specified and limited, the terms "install", "connect" and "connection" shall be understood in a broad sense. For example, they may be fixed connection, detachable connection, or integral connection; may be mechanical connection, electrical connection, or capable of communicating with each other; may be direct connection, or indirect connection through an intermediate medium, and may be communication within two elements or interaction relationship between two elements. For those of ordinary skill in the art, the specific meanings of the above terms in the present application can be understood according to specific situations.

The term "include", "comprise" or any other variants thereof is intended to cover non-exclusive inclusion, so that a product including a series of elements not only includes those elements, but also includes other elements not explicitly listed.

In the description of the embodiments of the present application, words such as "example" or "for example" are used for illustration, explanation or description. Any embodiment or design scheme described as "example" or "for example" in the embodiments of the present application shall not be interpreted as being more preferred than or having more advantages over another embodiment or design scheme. The words such as "example" or "for example" are intended to present relative concepts in a clear manner.

Before introducing the pole, cover plate assembly and battery cell provided by the present application, relevant background information of the embodiments of the present application is first introduced.

In related technologies, in order to ensure the reliability of the combination between the copper material and aluminum material of the pole, multiple interlocking structures are formed by means of extruding the aluminum material with the copper material and extruding the copper material with the aluminum material respectively at multiple combination positions between the copper material and the aluminum material. Since the conductivity of the copper material is better than the conductivity of the aluminum material, the end of the aluminum material is wrapped by the copper material, and the end of the aluminum material is made concave by extruding the end of the aluminum material with the copper material, so as to form a structure where the copper material is embedded into the aluminum material at one end of the pole. As a result, the structure where the copper material extrudes the aluminum material accounts for a relatively large proportion.

However, the material fluidity of the copper material is poor. When the copper material is used to extrude the aluminum material, the extruding force of the copper material on the aluminum material is insufficient, which leads to a large gap formed between the copper material and the aluminum material in the interlocking structure formed by extruding the aluminum material with the copper material, reducing the overcurrent capacity of the pole.

Based on this, in order to ensure the reliability of the combination between the copper material and the aluminum material while improving the overcurrent capacity between them, the embodiments of the present application provide a pole, a cover plate assembly and a battery cell, which are described in detail below respectively.

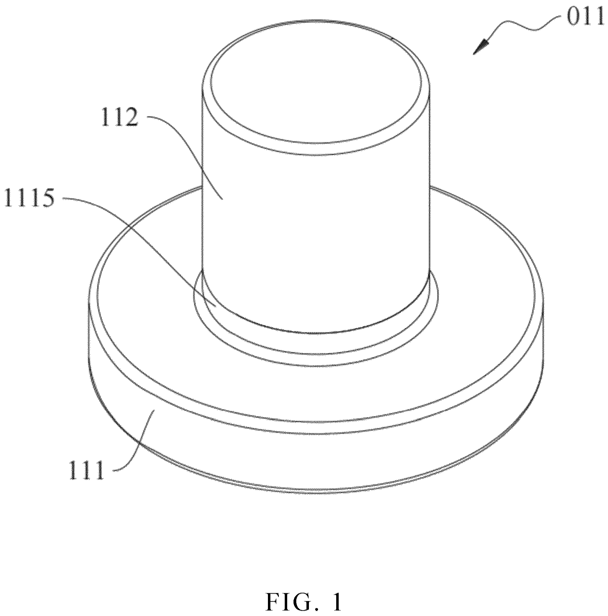

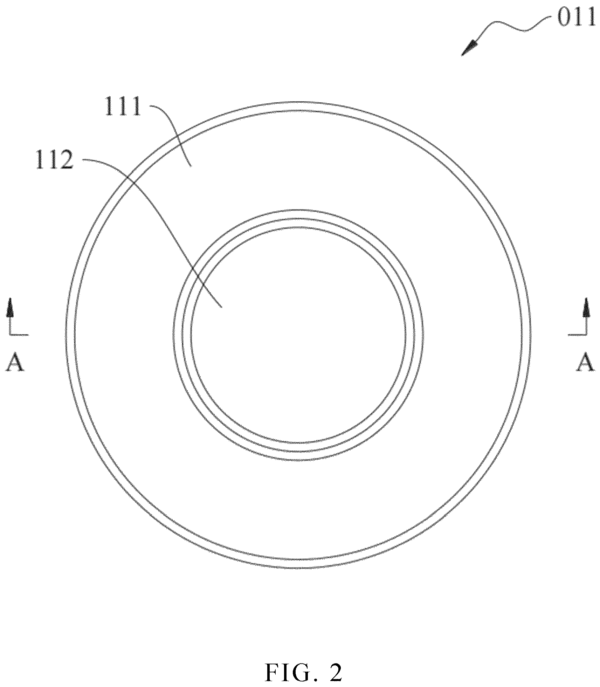

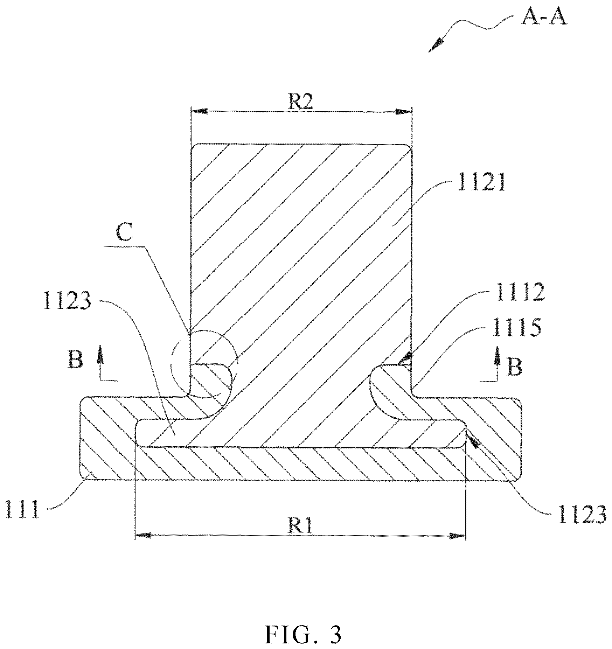

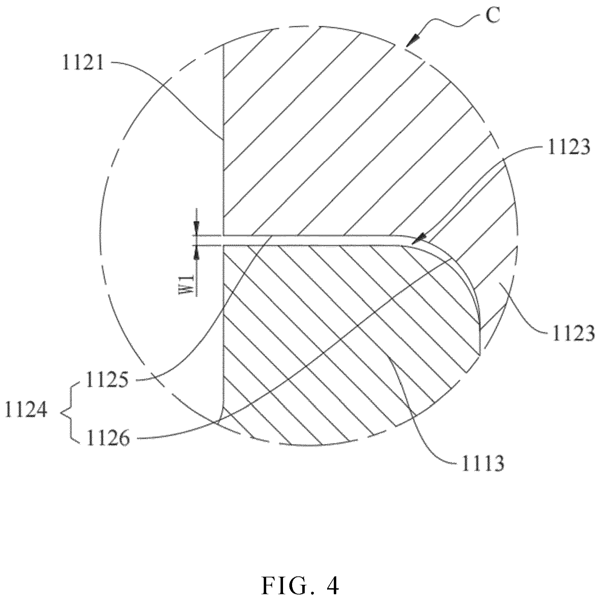

Please refer to Fig. 1 to Fig. 4. Fig. 1 is a schematic structural diagram of a pole 011 provided by embodiments of the present application, Fig. 2 is a top view of the pole 011 provided by embodiments of the present application, Fig. 3 is a cross-sectional view along A-A in Fig. 2, and Fig. 4 is an enlarged view of portion C in Fig. 3. Embodiments of the present application provide a pole 011. The pole 011 includes a first metal part 111 and a second metal part 112. The first metal part 111 has a first concave part 1112. A first convex part 1113 is convexly disposed on a side of the inner wall of the first concave part 1112 close to the opening of the first concave part 1112. The second metal part 112 includes a main body 1121 and a second convex part 1122 connected to each other. A second concave part 1123 is disposed on the outer peripheral surface of the second convex part 1122. The second convex part 1122 is embedded into the first concave part 1112. The first convex part 1113 is embedded into the second concave part 1123. A side of the second concave part 1123 away from the bottom wall of the first concave part 1112 is represented as a first surface 1124. Between the first metal part 111 and the second metal part 112, a gap is only disposed between the first convex part 1113 and the first surface 1124; the material fluidity of the second metal part 112 is greater than the material fluidity of the first metal part 111.

The spacing of the gap is W1, satisfying: W1≤0.1mm.

It can be understood that different metal materials have different corresponding material fluidity. Therefore, the material of the first metal part 111 is different from the material of the second metal part 112. Material fluidity refers to the ability of a metal material to fill surrounding gaps or spaces during casting, forging, or stamping.

It can be understood that the first metal part 111 and the second metal part 112 are disposed along the axial direction of the pole 011. The shape of the cross-section of the pole 011 may be circular, triangular, rectangular, polygonal, or the like.

It can be understood that the pole 011 is formed by upsetting to extrude the second metal part 112 toward the first metal part 111, so as to form the first concave part 1112 on the first metal part 111 and form the second convex part 1122 embedded into the first concave part 1112 on the second metal part 112, and at the same time, make the first metal part 111 extrude toward the second concave part 1123 to form the first convex part 1113 embedded into the second concave part 1123.

Exemplarily, the first metal is electrically connected with a current collector, and the current collector is of copper material; correspondingly, the first metal is of copper material, and the second metal is of aluminum material, which is connected with a terminal 012; alternatively, the second metal is electrically connected with the current collector, and the second metal is of copper material; correspondingly, the first metal may be of aluminum material, which is connected with the terminal 012.

In the present embodiment, by arranging the first convex part 1113 to be embedded into the second concave part 1123 and the second convex part 1122 to be embedded into the first concave part 1112, a structure where the first metal part 111 and the second metal part 112 are embedded into each other can be formed to ensure the reliability of the combination of the two metal materials; in addition, by embedding one end of the second metal part 112 with better material fluidity into the first metal part 111, during the upsetting forming of the pole 011, the second metal part 112 with better material fluidity can extrude the first metal part 111 to form a larger extruding surface where the second metal part 112 extrudes the first metal part 111. In this way, the extruding force between the two metal materials can be ensured based on the better fluidity of the second metal part 112, thereby reducing the gap of the combination surface between the second metal part 112 and the first metal part 111 and improving the overcurrent capacity of the pole.

Please refer to Fig. 4. In an embodiment, the first surface 1124 includes a top surface 1125 and a transition surface 1126. One side of the transition surface 1126 is connected with a side of the top surface 1125 close to the axis of the pole 011, and another side of the transition surface 1126 smoothly transitions to the bottom wall of the second concave part 1123.

Exemplarily, the top surface 1125 is perpendicular to the axis of the pole 011.

In the present embodiment, through the above arrangement, on the one hand, the contact surface between the first metal part 111 and the second metal part 112 can be increased through the transition surface 1126 to improve the overcurrent capacity of the pole 011; on the other hand, stress concentration can be improved to enhance the reliability of the pole 011.

Please refer to Fig. 3. In an embodiment, along the radial direction of the pole 011, an end of the second convex part 1122 away from the main body 1121 has a first radius R1, and the main body 1121 has a second radius R2, satisfying: R1 > R2.

In the present embodiment, by defining the first radius R1 to be greater than the second radius R2, the second convex part 1122 can have a larger radial dimension, so as to increase the mating surface between the second convex part 1122 and the first concave part 1112. In this way, the area of the combination surface between the first metal part 111 and the second metal part 112 can be increased, thereby improving the reliability of the combination between the first metal part 111 and the second metal part 112.

In addition, by defining the first radius R1 to be greater than the second radius R2, on the premise that the external area of the first metal part 111 is fixed, more second metal part 112 may be included inside the first metal part 111, thereby reducing the material consumption of the first metal part 111. Thus, when the first metal part 111 is selected as copper material and the second metal part 112 is selected as aluminum material, the material cost can be effectively controlled, and the weight of the pole 011 can be controlled.

Please refer to Fig. 3. In an embodiment, a difference between the first radius R1 and the second radius R2 is ΔR, satisfying: 40%R2≤ΔR≤60%R2.

It can be understood that the difference ΔR includes but is not limited to 40%R2, 42%R2, 45%R2, 47%R2, 49%R2, 50%R2, 53%R2, 55%R2, 57%R2, 58%R2, 59%R2, and 60%R2.

Exemplarily, taking the second radius R2 being 4mm as an example, the difference ΔR includes but is not limited to 1.6mm, 1.8mm, 1.9mm, 2mm, 2.1mm, 2.2mm, 2.3mm, and 2.4mm.

In the present embodiment, by defining the difference between the first radius R1 and the second radius R2, on the one hand, it can avoid that the radial dimension of the second convex part 1122 is too large, which would lead to higher forming difficulty, thereby controlling its manufacturing cost; on the other hand, it can avoid that the radial dimension of the second convex part 1122 is too small, which would affect the reliability of the combination between the first metal part 111 and the second metal part 112.

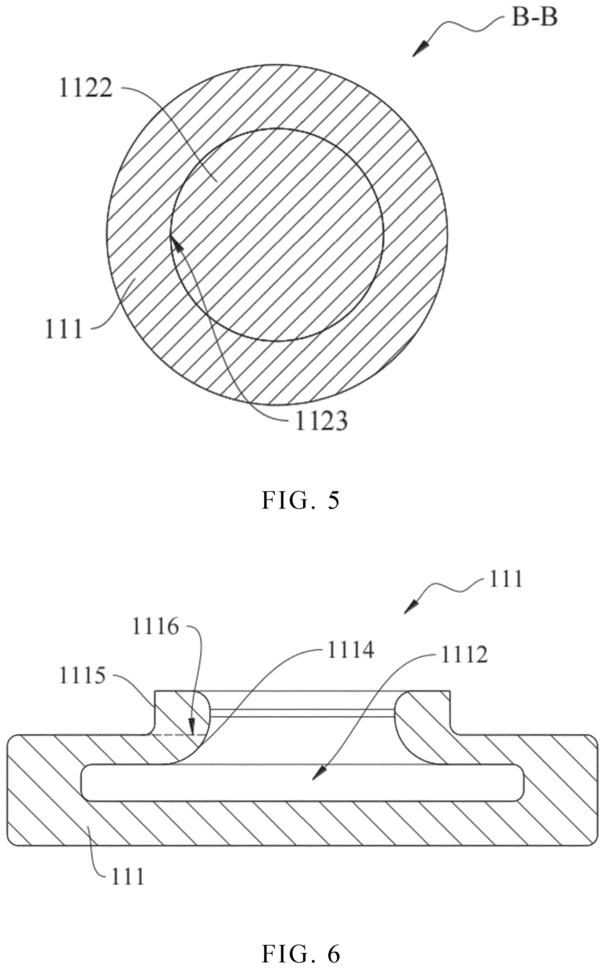

Please refer to Fig. 5. Fig. 5 is a cross-sectional view along B-B in Fig. 3. In an embodiment, the second concave part 1123 extends around the axis of the pole 011 to form an annular structure. The first convex part 1113 extends around the axis of the pole 011 to form an annular structure. In this way, the area of the embedding surface between the first convex part and the second concave part 1123 can be increased, thereby increasing the area of the combination surface between the first metal part 111 and the second metal part 112 to improve the reliability of the combination between the first metal part 111 and the second metal part 112.

Please refer to Fig. 6. Fig. 6 is a schematic structural diagram of the first metal part 111 provided by embodiments of the present application. In an embodiment, the first convex part 1113 includes a radial extension part 1114 and an axial extension part 1115. The radial extension part 1114 is disposed radially inward from a side of the inner wall of the first concave part 1112 close to the opening of the first concave part 1112. The radial extension part 1114 has a top end surface 1116 away from the bottom wall of the first concave part 1112. The axial extension part 1115 extends from the top end surface 1116 in a direction away from the bottom wall of the first concave part 1112.

It can be understood that the radius of the outer peripheral surface of the first convex part 1113 is smaller than the radius of the outer peripheral surface of the first metal part 111.

In the present embodiment, by configuring the first convex part 1113 into a structure including the radial extension part 1114 and the axial extension part 1115, the embedding surface between the first convex part 1113 and the second concave part 1123 can be increased, thereby improving the reliability of the combination between the first metal part 111 and the second metal part 112.

Please refer to Fig. 3. In an embodiment, the outer peripheral surface of the first convex part and the outer peripheral surface of the main body are disposed on the same circumference. Specifically, the radius of the outer peripheral surface of the extension part 1115 is consistent with the radius of the main body 1121. In this way, the outer surface structure of the pole 011 can be regular, facilitating the cooperation of the pole 011 with other components.

In an embodiment, the material of the first metal part 111 is copper material, and the material of the second metal part 112 is aluminum material. The negative current collector plate is of copper material, the first metal part 111 is connected with the negative current collector plate, and the second metal part 112 is connected with the terminal 012. In this way, the low resistance requirement of the pole 011 during overcurrent can be met to reduce electrical energy loss, and the material cost of the pole 011 can be controlled to improve the economy of the pole 011.

In addition, the copper material includes but is not limited to pure copper, brass, bronze, phosphor bronze, beryllium bronze, and oxygen-free copper.

The aluminum material includes but is not limited to 1070 aluminum plate, 1060 aluminum plate, and L3 aluminum plate.

In an embodiment, fillets are provided at the edges of the pole 011. In this way, stress concentration due to sharp corners of the pole 011 can be avoided, so as to improve the stress state of the pole 011 and prevent the pole 011 from scraping other components during installation.

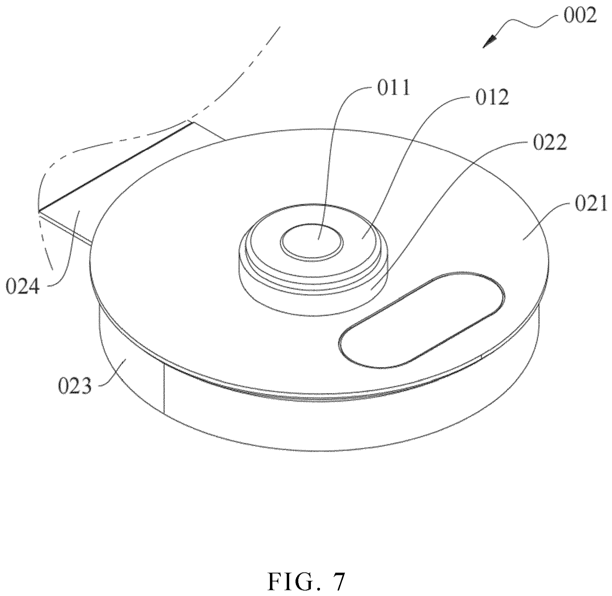

Please refer to Fig. 7. Fig. 7 is a schematic structural diagram of a cover plate assembly 002 provided by embodiments of the present application. Correspondingly, embodiments of the present application further provide a cover plate assembly 002. The cover plate assembly 002 includes a cover plate 021, an upper plastic part 022, a lower plastic part 023, a current collector 024, a sealing ring, and the aforementioned pole 011. The pole 011 penetrates through the cover plate 021. The terminal 012 is located on one side of the cover plate 021. The upper plastic part 022 is disposed between the terminal 012 and the cover plate 021. The lower plastic part 023 is disposed on another side of the cover plate 021. One end of the current collector 024 is connected with an end of the pole 011 away from the terminal 012. The sealing ring is disposed between the pole 011 and a mounting hole.

In the present embodiment, by adopting the aforementioned pole 011, a structure where the first metal part 111 and the second metal part 112 are embedded into each other can be relied on, and thus the area of the combination surface between the first metal part 111 and the second metal part 112 can be increased to improve the reliability of the combination between the first metal part 111 and the second metal part 112. In this way, the structure of the pole 011 is made reliable, and thus the structural stability of the cover plate assembly 002 can be improved.

Correspondingly, embodiments of the present application further provide a battery cell. The battery cell includes a housing, an electrode assembly, and the aforementioned cover plate assembly 002. The housing has a containing cavity. The electrode assembly is disposed in the containing cavity. The cover plate 021 is connected with the housing and closes the opening of the containing cavity. Another end of the current collector 024 is connected with the electrode assembly.

The electrode assembly includes at least a positive electrode plate, a separator, and a negative electrode plate which are disposed in a stacked manner.

It can be understood that the pole 011 is connected with the negative electrode plate of the battery cell through the current collector 024.

In the present embodiment, by adopting the aforementioned cover plate assembly 002, the reliability of the battery cell can be improved, so that while the pole 011 meets the overcurrent requirement of the battery cell, the cost can also be controlled, which is beneficial to improving the economy of the battery cell.

The embodiments of the present application are introduced in detail above. Specific examples are used herein to illustrate the principles and implementation manners of the present application. The description of the above embodiments is only used to help understand the method and core idea of the present application; meanwhile, for those skilled in the art, according to the idea of the present application, there will be changes in the specific implementation manners and application scopes. In conclusion, the content of this specification should not be understood as a limitation to the present application.

## Claims

1. A pole (011), **characterized by** comprising:
a first metal part (111), comprising a first concave part (1112), wherein a first convex part (1113) is convexly disposed on a side of an inner wall of the first concave part (1112) close to an opening of the first concave part (1112); and
a second metal part (112), comprising a main body (1121) and a second convex part (1122) connected to each other, wherein a second concave part (1123) is disposed on an outer peripheral surface of the second convex part (1122), the second convex part (1122) is embedded into the first concave part (1112), the first convex part (1113) is embedded into the second concave part (1123), and a side of the second concave part (1123) away from a bottom wall of the first concave part (1112) is represented as a first surface (1124);
wherein between the first metal part (111) and the second metal part (112), a gap is only disposed between the first convex part (1113) and the first surface (1124), and material fluidity of the second metal part (112) is greater than material fluidity of the first metal part (111).

2. The pole (011) according to claim 1, **characterized in that** the first surface (1124) comprises a top surface (1125) and a transition surface (1126), wherein one side of the transition surface (1126) is connected with a side of the top surface (1125) close to an axis of the pole (011), and another side of the transition surface (1126) smoothly transitions to a bottom wall of the second concave part (1123).

3. The pole (011) according to claim 1, **characterized in that** a spacing of the gap is W1, satisfying: W1≤0.1mm.

4. The pole (011) according to claim 1, **characterized in that** along a radial direction of the pole (011), an end of the second convex part (1122) away from the main body (1121) comprises a first radius R1, and the main body (1121) comprises a second radius R2, satisfying: R1 > R2.

5. The pole (011) according to claim 4, **characterized in that** a difference between the first radius R1 and the second radius R2 is ΔR, satisfying: 40%R2≤ΔR≤60%R2.

6. The pole (011) according to any of claim 1 to claim 5, **characterized in that** the second concave part (1123) extends around an axis of the pole (011) to form an annular structure, and the first convex part (1113) extends around the axis of the pole (011) to form an annular structure.

7. The pole (011) according to any of claim 1 to claim 5, **characterized in that** the first convex part (1113) comprises a radial extension part (1114) and an axial extension part (1115), wherein the radial extension part (1114) is disposed radially inward from a side of the inner wall of the first concave part (1112) close to the opening of the first concave part (1112), the radial extension part (1114) comprises a top end surface (1116) away from the bottom wall of the first concave part (1112), and the axial extension part (1115) extends from the top end surface (1116) in a direction away from the bottom wall of the first concave part (1112).

8. The pole (011) according to claim 7, **characterized in that** a radius of an outer peripheral surface of the axial extension part (1115) is consistent with a radius of the main body (1121).

9. The pole (011) according to any of claim 1 to claim 5, **characterized in that** an outer peripheral surface of the first convex part (1113) and an outer peripheral surface of the main body (1121) are disposed on a same circumference.

10. The pole (011) according to any of claim 1 to claim 4, **characterized in that** material of the first metal part (111) is copper material, and material of the second metal part (112) is aluminum material.

11. A cover plate assembly (002), **characterized by** comprising:
a cover plate (021);
the pole (011) according to any of claim 1 to claim 10, wherein the pole (011) penetrates through the cover plate (021);
a terminal (012), located on one side of the cover plate (021) and connected with the pole (011);
an upper plastic part (022), disposed between the terminal (012) and the cover plate (021);
a lower plastic part (023), disposed on another side of the cover plate (021);
a current collector (024), wherein one end of the current collector (024) is connected with an end of the pole (011) away from the terminal (012);
a sealing ring, disposed between the pole (011) and a mounting hole;
wherein, material of the first metal part (111) is the same as material of the current collector (024), the first metal part (111) is connected with one end of the current collector (024), and the terminal (012) is connected with the second metal part (112); or, material of the second metal part (112) is the same as the material of the current collector (024), the second metal part (112) is connected with one end of the current collector (024), and the terminal (012) is connected with the first metal part (111).

12. A battery cell, **characterized by** comprising:
a housing, comprising a containing cavity;
an electrode assembly, disposed in the containing cavity; and
the cover plate assembly (002) according to claim 11, wherein the cover plate (021) is connected with the housing and closes an opening of the containing cavity, and another end of the current collector (024) is connected with the electrode assembly.
